# EUROPEAN PATENT APPLICATION

(11) **EP 4 213 261 A1**
(43) Date of publication of application: **19.07.2023**
(21) Application number: 22151698.2
(22) Date of filing: 16.01.2022
(51) Int. Cl.: H01M 10/052, H01M 10/056

(54) **SMART ANODE ARRAY AND SOLID-STATE CYANOMETALATE/PHYLLOSILICATE ELECTROLYTE AND CATHODE**

(71) Applicant: Reuven, Darkeyah, Atlanta, GA 30310 (US)
(72) Inventor: Reuven, Darkeyah, Atlanta, GA 30310 (US)
(74) Representative: Kratochvil, Vaclav

(57) **Abstract**

All solid state battery (SSB) composed of electronically controlled smart anode array interfaced with solid-state cyanometalate/phyllosilicate electrolyte and cathode. The said SSB eliminates the limitations of current state of the art SSBs of mechanical and chemical instability.

## Description

### CROSS-REFERENCE TO RELATED APPLICATIONS

N/A

### FIELD OF THE DISCLOSURE

The present disclosure generally relates to ion chemical power delivery within a solid electrolyte battery containing solid anode, electrolyte and cathode material. The herein disclosed solid electrolyte cell has the advantage over current battery's, in that the solid electrolyte material is providing improved safety, and also provides increase stability to facilitating higher operating voltage and higher energy density.

### BACKGROUND OF THE DISCLOSURE

Current batteries utilize liquid fluorocarbon electrolyte material. Unfortunately, these organic liquids have potential combustibility safety issues; form reaction byproducts at the anode and cathode interface which limit battery performance. The present disclosure provides remedies to the stated limitations.

### BRIEF SUMMARY OF THE DISCLOSURE

The solid electrolyte battery (SEB) comprises: (a) anode array (AA); (b) the continuity electrodes array (CEA); (c) nano-layered solid electrolyte (NLSE); (d) cyano organic interface material (COIM); (e) and nano-layered cathode (NLC).

In one embodiment, the **anode array (AA)** can be horizontally and/or vertically and/or three dimensional geometric forms; such as rectangle and/or square and/or trapezoid and/or triangle arrays. In one embodiment, the AA can be parallel and/or serially electrically connected copper (Cu) and/or aluminum (Al) and/or carbon (C) and/or graphene array printed/patterned circuit board (PCB) array on which is deposited active metal (AM). In one embodiment the AM deposited on the AA can be a pure metal and/or an alloy of two or more of the following metal elements; lithium (Li) and/or sodium (Na) and/or magnesium (Mg) and/or Al and/or iron (Fe) and/or manganese (Mn) and/or potassium (K) and/or zinc (Zn) and/or bismuth (Bi) and/or tin (Sn) and/or silicon (Si) and/or silicon oxide (SiO2); can be deposited.

In one embodiment, the continuity electrodes array (CEA) can be parallel and/or serially electrically connected copper (Cu) and/or aluminum (Al) and/or carbon (C) and/or graphene array. These CEAs are separated from the AA by -10-50 um of COIM and/or NLSE material. The plurality of CEA and AA provide dendrite electrical continuity detection to the AA, also between the AA and the NLC due to dendrite growth between the AA and CEA; or into the NLSE. In one embodiment, the CEAs and/or AA can be electronically controlled, independently and/or collectively, by computer program(s) to effect continuity detection between the AA to CEA, or AA to NLC, and to effect AM deposition and redisbursement between AA pads. The AA and CEA array, in one embodiment, is composed of metal vapor deposited or laser etched cut out pattern of Aluminum foil and/or copper foil and/or carbon paper.

In one embodiment, and the nano-layered solid electrolyte (NLSE), comprises transition metal dichalcogenides; including, but not limited to, molybdenum disulfide and/or molybdenum diselenide and/or tungsten diselenide and/or molybdenum ditelluride, etc...; and/or nano-layered (NLSE, layered mineral phyllosilicates) including, but not limited to, Mica and/or Biotite and/or Fuchsite and/or Muscovite and/or Phlogopite and/or Lepidolite and/or Margarite and/or Glauconite and/or synthetic phyllosilicate material; in another embodiment silicon carbides; including, but not limited to, titanium Silicon Carbide; additionally the NLSE and organic material additive can intercalate and/or chelate atomic clusters and/or nano-clusters and/or micron particles of cobalt (Co) and/or manganese (Mn) and/or potassium (K) and/or cesium (Ce) and/or lithium (Li) and/or zinc (Zn) and/or sodium (Na) and/or bismuth (Bi) and/or tin (Sn) and/or silicon (Si) and/or silicon oxide (SiO2) and/or chromium (Cr); additionally the ion conductivity of the NLSE crystal is increased and/or decreased and/or tuned by mechanical vibration and/or piezoelectric vibration and/or electric induced vibration parallel and/or perpendicular to NLSE basal plane over 0 to 500,000 Hz resonant frequency range; the induced vibration is effected by mixing with and/or abutting electrically actuated micro-electromechanical system; various configured vibration points of contact (VPC) induce complex rippolocations patterns which induce increased or decreased biased ion flow in the NLSE; the natural and induced rippolocations exhibit momentary interstitial basal plane and/or edge positive and negative dipoles which act as coordination sites for intercalated metal ions which aid in perturbing the metal ions through the NLSE, thus resulting in ballistic ion transport (BIT)

In one embodiment, cyano organic interface material (COIM) interface material and NLSE additive comprises cyano-materials ferrocyanide, polycyanoacrylate and/or cyano functionalized polymers/saccarides; and/or Ethylenediaminetetraacetic acid which is mix and/or intercalate and/or chelate atomic clusters and/or nano-clusters and/or micron particles such as and/or Mn and/or Ce and/or Li and/or Zn and/or Na and/or Bi and/or Sn and/or Si and/or SiO2 and/or K and/or Co and/or Cr and/or Al and/or Cu; in addition or alternatively the COIM and/or metals can be mixed with carbonates; phosphates; borates; and sulfates; also the COIM can also act as an interface material between the AA and NLSE, also the NLSE and NLC.

In one embodiment, the nano-layered cathode (NLC), comprises transition metal dichalcogenides; including, but not limited to, molybdenum disulfide and/or molybdenum diselenide and/or tungsten diselenide and/or molybdenum ditelluride, etc... and/or nano-layered (NLSE, layered mineral phyllosilicates) including, but not limited to, Mica and/or Biotite and/or Fuchsite and/or Muscovite and/or Phlogopite and/or Lepidolite and/or Margarite and/or Glauconite and/or synthetic phyllosilicate material; in another embodiment silicon carbides; including, but not limited to, titanium Silicon Carbide; additionally the NLC and organic material additive can intercalate and/or chelate atomic clusters and/or nano-clusters and/or micron particles of chlorine (Cl), and/or bromine (Br), and/or sulfur (S_{8, 8-n}) and/or bismuth (Bi) and/or tin (Sn) and/or silicon (Si) and/or silicon oxide (SiO2) and/or iodine (I) and/or selenium (Se). NLC intercalate material can form Sulfur crosslinked Species (SCS) of varying stoichiometry (see Table 1).

### BRIEF DESCRIPTION OF THE FIGURES

The following figures all solid cell (ASC) are by way of illustration purposes only, and thus are not intended to limit the scope of the present disclosure.

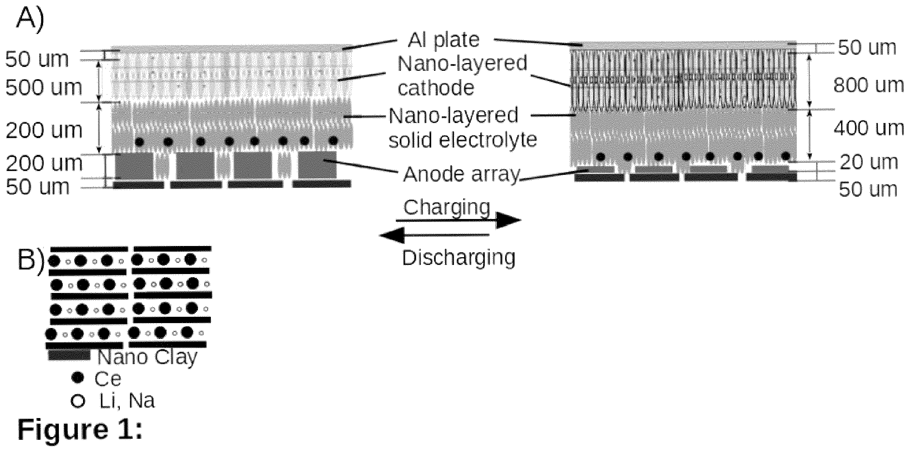

FIG. 1. A) Schematic of an example of the all solid cell (ASC) showing ion filled nano-layered cathode (NLC) mixed with graphene, interfaced with an Aluminum plate, (500 µm); anode array (AA) composed of active metal (AM) on printed circuit board (PCB) array (200 µm); and high surface area nano-layered solid electrolyte (NLSE) (200 µm); B) and layered mineral phyllosilicate material, in this example, prevents aggregation of intercalated with atomic clusters and/or nano-clusters and/or micron particles of cesium (Ce). lithium (Li) and/or sodium (Na) during battery cycling.

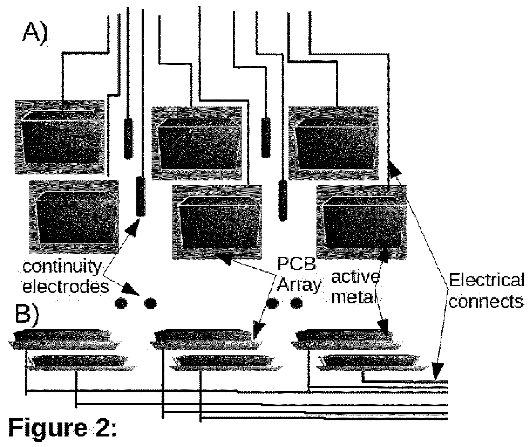

FIG. 2. Anode array (AA) composed of electrically connected active material (AM) on printed circuit board (PCB) array; and associated continuity electrodes array (CEA).

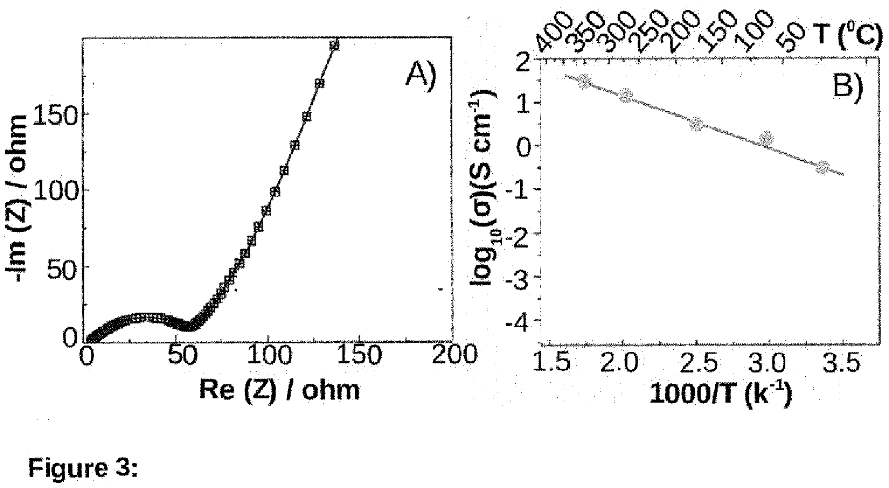

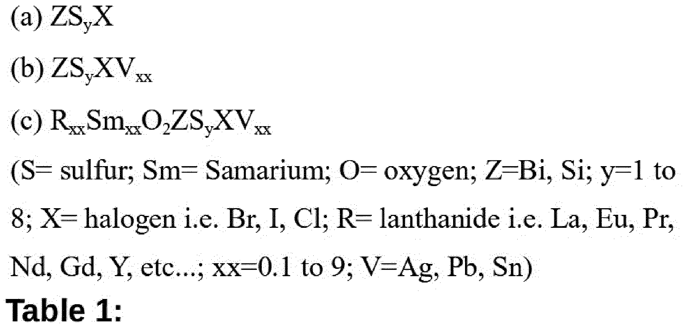

FIG. 3. A) Ionic conductivity of lithium (Li) and sodium (Na) through the nano-layered solid electrolyte. B) Electrochemical impedance spectroscopy (EIS) of an example of a solid electrolyte cell with Bi/Cl/S-NLC cathode (20% graphene), and lithium metal anode; and nano-layered solid electrolyte (NLSE).

Table 1: Sulfur crosslinked Species (SCS) of varying stoichiometry.

### DETAILED DESCRIPTION OF THE DISCLOSURE

The present disclosure provides for an all solid state battery.

The NLSE and NLC is composed of phyllosilicates that contain rippolocations, which are regularly spaced nano-layers and repeated diamond shaped stress pattern network composed of dislocated basal plane nano-layers. These phyllosilicates nano-layers allow for the efficient ions diffuse through NLSE and NLC during charging and/or discharging of the battery.

The solid electrolyte cell has the advantage over current battery's, in that the solid electrolyte material is providing improved safety, and also provides increase stability to facilitating higher operating voltage and higher energy density. The battery design (FIG. 1) provides added benefits in that it facilitates a thin solid battery, both resulting in lower ion conductivity resistance and thus higher power and energy density. Also, the structure reduces mechanical strain during ion intercalation during charging and discharging cycles, thus improving the battery operating lifetime.

In one embodiment, electrically conductive material as a conductive matrix is mixed with the NLC material; wherein , the NLC material is composed of nano-layeres interfaced or non-intercalated with conductive graphite/carbon, and COIM. In one embodiment, the NLC can also form Sulfur crosslinked Species (SCS) of varying stoichiometry via the intercalation of atom and/or clusters of tin (Sn) and/or sulfur (S) and/or silicon (Si) and/or silicon oxide (SiO2)and/or bismuth (Bi) and/or cesium (Ce) and/or selenium (Se) and/or Samarium (Sm); and/or halogens, including but not limited to, iodine (I), bromine (Br) and/or chlorine (Cl); and/or lanthanides, including but not limited to, lanthanum (La), and/or Europium (Eu), and/or praseodymium (Pr), and/or neodymium (Nd), and/or Yttrium (Y), gadolinium (Gd) etc. In one embodiment Sulfur (S_{8, 8-n}), NaCl, LiCl, Nal, Lil, NaBr, and/or LiBr and other salts can be mixed with the NLC in preparation steps. In one embodiment, the Sn, Sm, Bi, Si, SiO2, I, Br, and/or Cl can crosslink with sulfur, to form various sulfur crosslinked species (see Table 1: a, b, c). The SCS nano-clusters are fixed within the phyllosilicate/carbon composite, additionally, form reversible salt complex species with Na and/or Li and/or Mg and/or Fe. In one embodiment, the cyano organic interface material (COIM) interfaced with the NLC can chelate and bind atom and/or clusters of Bi and/or Si and/or SiO2 and/or Sn.

The porous structure of the NLC and NLSE has rippolocations, which are microporosity and/or nanoporosity diamond repeating structural features. For example, each porous particle/crystal structure, independently, has a porosity of 10% to 90%, including all integer % values and organic/metal/clay. In another example, each porous particle, independently, has a porosity of 40% to 80%. The porous particle (e.g., organic/metal/clay) provide structural support to the dense organic/metal/clay so that the thickness of the dense organic/metal/nano-layered can be reduced, thus reducing its resistance.

In one embodiment, the phyllosilicates in the NLC and NLSE material can be obtained or synthesized as large crystals; the phyllosilicates crystal layers of the NLSE and NLC can be perpendicularly polished to the basal plane and the basal plane are then parallel aligned to the anode; I another embodiment, the phyllosilicates in the NLC and NLSE material can be obtained by systematically synthesized by solid or liquid mixing techniques. For example, a mixture of starting materials may be mixed in an organic solvent (e.g., water, ethanol or methanol) and the mixture of starting materials dried to evolve the organic solvent. The mixture of starting materials may be ball milled. The ball milled mixture may be calcined. For example, the ball milled mixture is calcined at a temperature between 400°C. to 1999°C., including all integer °C. The calcined mixture may be sintered. For example, the calcined mixture is sintered at a temperature between 400 °C. to 1999°C. To achieve the prerequisite particle size distribution, the calcined mixture may be milled using a technique such as vibratory milling, attrition milling, jet milling, ball milling, or another technique known to one of ordinary skill in the art.

One of ordinary skill in the art would understand that a number of conventional fabrication processing methods for processing the NLSE and NLC. Such methods include, but are not limited to, casting, calendaring, embossing, punching, cutting, slip casting, gel casting, die casting, solvent bonding, lamination, heat lamination, pressing, isostatic pressing, hot isostatic pressing, uniaxial pressing, extrusion, co-extrusion, centrifugal casting, and sol gel processing. The resulting composite material may then be thermally processed in air, or controlled atmospheres to decrease loss of individual components. In some embodiments of the present invention it is advantageous to fabricate solid materials by die-pressing, optionally followed by isostatic pressing. In other embodiments it is advantageous to fabricate the NLSE and NLC using a combination of methods such as punching, casting, cutting, heat lamination, solvent bonding, or other techniques known to one of ordinary skill in the art.

A critical performance limitation of all-solid-state lithium batteries is at the interfaces of metal anodes (Li, Na, Mg or Fe), solid electrolytes and solid cathodes exhibit poor ionic and electronic contact resulting in interfacial ionic resistance. The COIM chelated with bismuth and/or silicon and/or tin significantly improved the electrochemical ionic performance at all anode, electrolyte and cathode interfaces, due to the reduction of the interfacial resistances via the alloying and expansion of COIM chelates with mobile cations, which creates an uninterrupted cation pathway possessing hybridized interface molecular orbitals.

The COIM chelated with semimetal bismuth (COIM-Bi) has especially high thermal and redox stability when interfaced at the metal anode array; due to bismuth low thermal conductivity. Additionally, the chelated Bi and/or Si and/or SiO2 and/or Sn within the COIM nanocomposite readily alloys with Li and Na leading to fracturing of the Bi or Si cluster. The fracturing of the Bi or Si clusters increases the chelate surface area, decreasing ion adsorption and desorption time; leading to increase ion conductivity. In one embodiment, COIM-Bi and/or COIM-Si nanocomposite increases the ionic conductivity between the AA and NLSE. The composite is deposited on the anode array in liquid-phase process followed by heat treatment, and NLC is put on the modified surface by just pressing, without heat treatment. All the fabrication of the battery can be done with conventional ceramic processing equipment in ambient air without the need of dry rooms, vacuum deposition, or glove boxes, dramatically reducing cost of manufacturing.

The flammable organic liquid electrolyte material of conventional battery can be replaced with non-flammable SE that exhibit, for example, at room temperature SE charge particle conductivity of ≧1 Scm⁻¹ and electrochemical stability up to 6V. Moreover, the integration of these composite clay particle electrolyte material in a planar stacked structure with metal collectors will provide battery mechanical strength.

NLSE material, for example, at room temperature (RT) has a Li and Na conductivity of^{~}1 Scm⁻¹ and ^{~}10⁻¹ Scm⁻¹, respectively. Use of scaleable multilayer ceramic fabrication techniques, without need for dry rooms or vacuum equipment, provide dramatically reduced manufacturing cost.

For the all solid battery with no solid electrolyte interface (SEI) performance degradation mechanisms inherent herein described battery, the calendar life of the battery is expected to exceed 10 years and cycle life is expected to exceed 5000 cycles.

The nanoclay is composed of high (nm × µm) aspect ratio - 1 nm thick phyllosilicate layers intercalated with metal cations, which form multiple ~ 10 µm-sized multilayer stacks. In one embodiment, Ce, Li and/or Na atoms and/or cluster complexes were successfully intercalated into interlayer surfaces of phyllosilicate layers. The Basal spacings between phyllosilicate layers increased after intercalation with Ce and subsequent Li/Na cation-exchange, or in another embodiment the further intercalation with Na or Mg. Following the dehydration of the Ce-nanoclay the composite maintained a ~0.5 nm interlayer spacing; the collapsed phyllosilicate layers immobilized the Ce atoms and clusters. The Ce mediated ~0.5 nm phyllosilicate interlayer spacing allowed for the subsequent ion (ie. Li and/or Na and/or Mg) conduction or ion (ie. Li and/or Na and/or Mg) intercalation/deintercalation in NCE or NLC, respectively. The nano-layered phyllosilicate layers stabilize the intercalate atoms and clusters by limiting their mobility and aggregation. In one embodiment, nano-layered intercalation layer spacing was carried out using small fluoro-molecules (ie. lithium bis(fluorosulfonyl)imide, fluoroethylene carbonate, fluoroethylether, lithium difluoro(oxalato)borate, fluorocyanoesters, 3-fluoroanisol, 2.4 Fluorosilane, 1,1,2,2-tetrafluoroethyl-2,2,3,3-tetrafluoropropyl ether, 4-Fluoro-1,3-dioxolan-2-one, is utilized as a nanoclay conduction spacer.

The ionic conductivity of NLSE is highly correlated to the concentration of the ions in the layered structure. The relationship between the ion conductivity and diffusion coefficient for ion, such as lithium (Li⁺). The conductivity increases with ion content, for example, exhibits a RT conductivity of 1 S/cm. However, conductivity also depends on synthesis conditions, including sintering temperature. The effects of composition and synthesis method can be determined to achieve a minimum RT conductivity or^{~}1 S/cm for the scaffold supported NLC and SE.

Due to the powder nature the NLSE can be fabricated using conventional fabrication techniques. This has tremendous advantages in terms of both cost and performance. All the NLSE and NLC fabrication can be done with conventional ceramic processing equipment in ambient air without the need of dry rooms, vacuum deposition, or glove boxes, dramatically reducing cost of manufacturing.

Moreover, during charge/discharge cycling the NLSE and NLC has minimal change in overall cell particle dimensions allowing for the battery to be stacked. Light-weight, ^{~}50 microns thick Al plates will serve not only as collectors but also provide mechanical strength. ^{~}50 nm of Cu can be electrodeposited on the anode side for electrochemical compatibility with Li metal.

The NLSE solid state chemistry is expected to increase the specific energy density and decrease the cost on the cell level, and also avoid packing material and system cooling engineering requirements.

The theoretical effective specific energy, including structural bipolar plate, is ^{~}950 Wh/kg. The overpotential at C/3 is negligible compared with the cell voltage, leading to an energy density that is close to theoretical limit. Since the bipolar plate provides strength and no temperature control is necessary for the battery pack other than suitable external packing. The corresponding effective energy density of the complete battery pack is ^{~}2500 Wh/L.

## Claims

1. The solid state battery (SSB) comprises: (a) anode array (AA); (b) nano-layered solid electrolyte (NLSE); (c) nano-layered cathode (NLC); (d) cyano organic interface material (COIM); (e) and the continuity electrodes array (CEA); (f) nano-layer phyllosilicates (NLP).

2. The SSB of claim 1, wherein the said anode array (AA) is vertically and/or horizontally positioned to form rectangle and/or square and/or trapezoid and/or triangle arrays; and the said AA can be parallel and/or serially electrically connected copper (Cu) and/or aluminum (Al) printed/patterned circuit board (PCB) array on which is deposited active metal (AM); in which the said AM can be lithium (Li) and/or sodium (Na) and/or magnesium (Mg) and/or aluminum (Al) and/or iron (Fe) and/or manganese (Mn) and/or and/or potassium (K) and/or zinc (Zn) and/or bismuth (Bi) and/or tin (Sn) and/or silicon (Si) and/or silicon oxide (SiO2) can be deposited.

3. The SSB of claim 1, wherein the said nano-layered solid electrolyte (NLSE) are rippolocations containing crystals cut and polished and with basal plane perpendicularly and/or parallel interfaced to said anode array and nano-layered cathode; the said crystals included, but not limited to, transition metal dichalcogenides and/or molybdenum disulfide and/or tungsten diselenide and/or molybdenum ditelluride and/or molybdenum diselenide; additionally phyllosilicates including, but not limited to, Fuchsite and/or Muscovite and/or Mica and/or Biotite and/or Phlogopite and/or Lepidolite and/or Margarite and/or Glauconite and/or synthetic phyllosilicate material; also silicon carbides, titanium Silicon Carbide, additionally the said NLSE can intercalate and/or chelate atomic clusters and/or nano-clusters and/or micron particles of cobalt (Co) and/or manganese (Mn) and/or potassium (K) and/or cesium (Ce) and/or lithium (Li) and/or zinc (Zn) and/or sodium (Na) and/or bismuth (Bi) and/or tin (Sn) and/or silicon (Si) and/or silicon oxide (SiO2) and/or chromium (Cr); additionally the ion conductivity through rippolocations of the NLSE crystal is increased and/or decreased and/or tuned by mechanical vibration and/or piezoelectric vibration.

4. The SSB of claim 1, wherein the said NLC comprises transition metal dichalcogenides; including, but not limited to, molybdenum disulfide and/or molybdenum diselenide and/or tungsten diselenide and/or molybdenum ditelluride; and phyllosilicates including, but not limited to, Mica and/or Phlogopite and/or Lepidolite and/or Biotite and/or Fuchsite and/or Muscovite and/or Margarite and/or Glauconite and/or synthetic phyllosilicate material; silicon carbides; including, but not limited to, titanium Silicon Carbide; carbon allotropes; including, but not limited to, carbon black, graphite and graphene; additionally the NLC material can intercalate and/or chelate and/or chemically interface with atomic clusters and/or nano-clusters and/or micron particles of chlorine (Cl), and/or bromine (Br), and/or sulfur (S8, 8-n) and/or bismuth (Bi) and/or tin (Sn) and/or silicon (Si) and/or silicon oxide (SiO2) and/or iodine (I) and/or selenium (Se); NLC intercalate/chelate/chemically interface material can form matrix stabilized sulfur crosslinked species (SCS) of varying stoichiometry.

5. The SSB of claim 1, wherein the said COIM comprises cyanometalates, such as following potassium ferrocyanide (Potassium hexacyanoferrates), sodium ferrocyanide, calcium ferrocyanide, lithium ferrocyanide, chromium hexacyanoferrates and cobalt hexacyanoferrates, polycyanoacrylate and cyano functionalized polymers/saccarides; and/or Ethylenediaminetetraacetic acid; the said COIM can chelate and/or intercalate atomic clusters and/or nano-clusters and/or micron particles of Sn and/or Bi and/or Si and/or SiO2 and/or copper (Cu) and/or aluminum (Al) in the SSB; the said COIM also act as an interface material between the AA and NLSE, also the NLSE and NLC.

6. The SSB of claim 1, wherein the said CEA can be parallel and/or serially electrically connected copper (Cu) and/or aluminum (Al) and/or carbon (C) and/or graphene array; the said CEA is separated from the AA by ~10-50 um of COIM and/or NLSE material; the CEA provide electrical continuity detection between the AA and the NLC, due to between the AA and CEA or NLC; or into the NLSE.

7. The SSB of claim 1, wherein the CEAs and/or AA and/or NLC and/or their constituent elements are electronically controlled, independently and/or collectively, by computer program(s) to effect dendrite growth continuity detection between the AA to CEA, or AA to NLC; and to effect AM deposition and redisbursement between AA features; the AA and CEA array, are composed of metal vapor deposition or laser etched cut out pattern of Aluminum foil and/or copper foil and/or carbon paper.
